# NEUE EUROPÄISCHE PATENTSCHRIFT

(11) **EP 2 001 585 B2**
(45) Veröffentlichungstag und Bekanntmachung des Hinweises auf die Entscheidung über den Einspruch: **18.02.2015**
(45) Hinweis auf die Patenterteilung: 22.02.2012
(21) Anmeldenummer: 07723685.9
(22) Anmeldetag: 28.03.2007
(51) Int. Cl.: C08F 2/02

(54) **VERFAHREN UND VORRICHTUNG ZUR DURCHFÜHRUNG VON POLYMERISATIONSPROZESSEN**
PROCESS AND APPARATUS FOR CONDUCTING POLYMERIZATION PROCESSES
PROCÉDÉ ET DISPOSITIF POUR LA MISE EN OEUVRE DES PROCEDES DE POLYMERISATION

(30) Priorität: 31.03.2006 DE 102006015541
(43) Veröffentlichungstag der Anmeldung: 17.12.2008
(73) Patentinhaber: LIST Holding AG, 4422 Arisdorf (CH)
(72) Erfinder: FLEURY, Pierre-Alain, CH-4433 Ramlinsburg (CH); LICHTI, Pierre, CH-4132 Muttenz, BL (CH)
(74) Vertreter: Weiss, Peter
(86) Internationale Anmeldenummer: PCT/EP2007/002739
(87) Internationale Veröffentlichungsnummer: WO 2007/112901

(56) Entgegenhaltungen:
- EP-A1- 0 209 253
- EP-A1- 0 517 068
- EP-A2- 1 127 609
- EP-A2- 1 127 609
- WO-A-2006/034875
- WO-A1-2004/018087
- WO-A1-2006/034875
- WO-A1-2007/112901
- DE-A1- 19 955 861
- GB-A- 1 524 433
- US-A- 3 927 983
- US-A- 5 372 418
- FLEURY P.-A. ET AL: 'COMPARISON OF DEVOLATILIZATION TECHNOLOGIES FOR VISCOUS POLYMERS' LIST 2005, Seiten 1 - 6

## Beschreibung

Die Erfindung betrifft ein Verfahren zur Durchführung von Polymerisationsprozessen nach dem Oberbegriff von Anspruch 1

### STAND DER TECHNIK

Ein beträchtlicher Teil von Polymerisationsreaktionen insbesondere zur Herstellung von homo- und co-polymeren Thermoplasten und Elastomeren werden kommerziell als "Slurry or Solution Process" in einem oder mehreren hintereinandergeschalteten kontinuierlich betriebenen, rückgemischten, vertikalen Rührkesselreaktoren sog. "CSTR" continuous stirred tank reactors, durchgeführt.

Diese Rührkesselreaktoren haben die Aufgabe, die Monomere, die Katalysatoren und Initiatoren in einem Lösemittel/Verdünnungsmittel bei genau definierten Prozessbedingungen, wie Temperatur und Druck, möglichst homogen zu verteilen, damit die Reaktion kontrolliert abläuft, eine gleichmässige Produktqualität mit der gewünschten Molmasse entsteht und ausserdem die Reaktionswärme beherrscht wird.

Die Problematik dieser Rührkesselreaktoren besteht nun darin, dass nur Produkte mit einer niedrigen scheinbaren Viskosität verarbeitet werden können. Bei steigender Konzentration des Polymers im Lösemittel/Verdünnungsmittel steigt die scheinbare Viskosität der Reaktionsmasse derart an, dass der Rührer schliesslich keine ausreichende konvektive Strömung erzeugen kann. Die Folge davon ist eine inhomogene Verteilung der Monomere. Dies führt zu Klumpenbildung, schlechter Molemasseverteilung, Anbackungen, örtlichen Überhitzungen bis hin zum unkontrollierbaren Reaktionsablauf des ganzen Reaktorinhalts.

Ein weiteres Problem von Rührkesselreaktoren ist bei einzelnen Produkten die Schaumbildung, welche bei den Dampfabzügen zu Verstopfungen führen kann.

Die oben genannten Prozessgefahren führen dazu, dass Rührkesselreaktoren mit einem grossen Überschuss an Lösemittel/Verdünnungsmittel bis zu ca. 90 % der Reaktionsmasse betrieben oder bei Bulkpolymerisationen nur Umsätze von weniger als 50% erzielt werden können. Als Folge davon werden zusätzliche Verfahrensschritte zur mechanischen/thermischen Abtrennung des Verdünnungsmittesl/Lösemittels/Monomers resp. zur Nachreaktion notwendig. Dies geschieht in der Regel in Entwässerungsschnecken, Eindampf- und Trocknungsanlagen sowie Reifungstanks. Sie bedeuten hohe Investitions-, Energie- und Betriebskosten. Es gibt auch neue Polymere, die nicht mit "Water Stripping Process" verarbeitbar sind!

Bulkpolymerisationen werden auch in ein- oder mehrwelligen Extrudern (z.B. von Werner Pfleiderer, Buss-Knete oder, Welding Engineers) kontinuierlich durchgeführt. Diese Apparate sind für Polymerisationen in der viskosen Phase bis zu hohen Umsätzen konzipiert. Sie sind als kontinuierliche Pfropfenströmungsreaktoren konstruiert und haben dementsprechend ein grosses UD Verhältnis von > 5 bis ca. 40.

Hier treten folgende Probleme auf:
1. a) Bei langsamen Polymerreaktionen mit Reaktionszeiten > 5 Minuten, bei welchen die Reaktionsmasse lange im flüssigen Zustand bleibt, lässt sich die Pfropfenströmung nicht aufrechterhalten. Die stark unterschiedlichen rheologischen Eigenschaften zwischen den Monomeren und Polymeren verhindern einen gleichmässigen Produkttransport, was zu unerwünschten Qualitätsschwankungen führt.
2. b) Die starke Exothermie vieler Polymerisationsprozesse sowie die dissipierte Knetenergie machen es häufig erforderlich, diese Energien über eine Verdampfungskühlung abzuführen. Dabei wird ein Teil des Monomers oder eines beigemischten Lösemittels/Verdünnungsmittels verdampft, in einen externen Kondensator kondensiert und das Kondensat in den Reaktor rückgeführt. Aufgrund des grossen UD Verhältnisses und des konstruktiv bedingten grossen Schneckenquerschnitts stehen für den Abzug von Dämpfen nur sehr beschränkte freie Querschnittsflächen zur Verfügung. Dies führt zum unerwünschten Mitreissen von Polymeren in die Brüdenleitungen und in den Rückflusskondensator und als Folge davon zu Verstopfungen.
3. c) Bei der Herstellung von (Co-) Polymeren aus mehreren unterschiedlichen Monomeren kommt erschwerend hinzu, dass für die Verdampfungskühlung hauptsächlich das Monomer mit dem niedrigsten Siedepunkt verdampft, so dass sich im Reaktor eine Verschiebung der Monomerkonzentrationen einstellt, insbesondere im Bereich der Eintrittsöffnung des Kondensatrückflusses. Dies ist in der Regel unerwünscht.
4. d) Nachteilig ist ausserdem, dass das freie Produktvolumen von Schnecken aus mechanisch konstruktiven Gründen auf etwa 1,5 m³ beschränkt ist, so dass bei Reaktionen mit Verweilzeiten >5 Minuten nur niedrige Durchsätze erzielt werden können, was die Installation von mehreren parallelen Linien mit entsprechend hohen Investitions- und Betriebskosten erfordert.

Eine weitere Möglichkeit zur Durchführung von Bulkpolymerisationen bis zu hohen Umsätzen wird in der US 5.372,418 beschrieben. Hier werden gleich oder gegenläufige Mehrschneckenextruder mit nicht kämmenden, in gegensätzlicher Richtung fördernden Schnecken oder Schneckenpaaren zur Polymerisation der Monomere durch Rückvermischung mit dem Polymer in der viskosen Phase beschrieben. Diese Apparate sind grundsätzlich in der Lage, Polymerisationsprozesse bis zu hohen Umsätzen durchzuführen und gleichzeitig die vorher beschriebenen Nachteile a) (Zusammenbruch der Pfropfenströmung) und c) (Rezepturverschiebung durch Rückfluss) vom Pfropfenströmungsextruder zu vermeiden. Ungelöst bleiben aber nach wie vor die vorher beschriebenen Probleme b) (reduzierter freier Querschnitt) und d) (Baugrösse)

O.g. Verfahren werden auch in sogenannten Mischkneter durchgeführt, in denen das Produkt durch entsprechende Knet- und Transportelemente von einem Einlass zu einem Auslass transportiert und gleichzeitig mit den Wärmeaustauschflächen in intensiven Kontakt gebracht wird. Derartige Mischkneter sind beispielsweise in der DE-PS 23 49 106, der EP 0 517 068 A1 und der DE 195 36 944 A1 beschrieben.

Ein Verfahren der o. g. Art ist bspw. aus der GB 1 524 433 bekannt. Dort erfolgt der Polymerisationsprozess in drei Stufen, zum Einen in einem Tankreaktor, des Weiteren in einem Mischer und die dritte Stufe in einem Kneter. In einzelnen dieser Stufen kann das Produkt auch rückgemischt werden.

### AUFGABE

Aufgabe der vorliegenden Erfindung ist es, das o.g. Verfahren nochmals zu verbessern und vor allem auch zu beschleunigen.

### LÖSUNG DER AUFGABE

Die Aufgabe wird gelöst durch ein Verfahren gemäß Anspruch 1.
Hierbei wird das Produkt durch Energieeintrag, bestehend aus mechanischer Knetenergie und Wärmeübertragung, über den Kontakt mit Kneterwärmeaustauschflächen bis nahe oberhalb der Einbruchstelle der Verdampfungsgeschwindigkeit verdampft und in das so voreingedampfte viskose Produktbett kontinuierlich neue niedrigviskose Produktlösung derart eingemischt, dass die Verdampfungsgeschwindigkeit oberhalb der Einbruchstelle bleibt.

Eine geringe Viskosität zeigt dem Betreiber eines entsprechenden Mischkneters, dass nur oder im wesentlichen Monomer im Mischkneter sich befindet, welches dünnflüssig ist. Je mehr die Polymerisation fortschreitet, um so mehr nimmt die Viskosität zu. Wird eine vorbestimmte Viskosität des Produktes erreicht, ist dies ein Signal dafür, dass ein bestimmter Prozentsatz des Produktes sich nunmehr in Polymer umgewandelt hat. Dies ist ein Signal, den Mischkneter im kontinuierlichen Verfahren zu betreiben und zwar in der Art, dass die Viskosität und damit der Umsatz bzw. Grad der Polymerisation gleich bleibt. Im wesentlichen wird dies anhand des Drehmomentes bestimmt. Bei PMMA, welches unter 3,5 bar bei 160°C Reaktionstemperatur und 30 Umdrehungen pro Minute der Welle verarbeitet wird, wird ein Plateau der Viskosität, bei welchem ein Umschalten auf den kontinuierlichen Betrieb erfolgt, bei 100 Nm Drehmoment erreicht.

Ist das Produkt bei hohem Lösungsmittelanteil anfänglich noch sehr flüssig, so erfolgt das Verdampfen im wesentlichen über die Kontaktwärme, die aus einem geheizten Gehäusemantel, einer geheizten Welle und/oder geheizten Knetgegenelementen kommt. Je viskoser das Produkt durch die Eindampfung wird, desto mehr nimmt die Kontaktwärmeübertragung ab und umso mehr Scherwärme kommt hinzu, wobei die Summe von beiden ein Maximum durchläuft. Ab einer bestimmten Verminderung des Prozentsatzes an flüssigen Bestandteilen nimmt jedoch die Verdampfungsgeschwindigkeit ganz erheblich ab, da nicht mehr genügend Lösungsmittel vom Gutsinneren an die Oberfläche nachgeliefert werden kann. Efindungsgemäss soll deshalb der Bestandteil an beispielsweise Lösungsmitteln in einem Prozessbereich gehalten werden, der nahe am Maximum aber unbedingt noch oberhalb dieser Einbruchstelle der Verdampfungsgeschwindigkeit liegt.

Durch dieses erfindungsgemässe Verfahren wird der Vorteil erreicht, dass bei der erhöhten Arbeitsintensität eine Schaumbildung, die von der Flash-Dosierung des Produktes in den Mischkneter herrührt, gebrochen wird, wodurch der Wärmeenergieeintrag nochmals verbessert wird. Die zur Eindampfung benötigte Verdampfungsenergie wird dementsprechend durch die Kombination von Kontaktwärme und Scherwärme maximiert. Die Möglichkeit, über die Verdampfung von Lösungsmittel die Produkttemperatur konstant zu halten, erlaubt einen hohen Freiheitsgrad in Bezug auf die Regulierung der Scherwärme über die Drehzahl (Schergefälle) und den Füllgrad des Mischkneters.

Eine Erwärmung des Produktes auf seine Siedetemperatur wird nicht nur dazu benutzt, entsprechende Lösemittel, Katalysatoren und/oder Initiatoren oder dgl. zu verdampfen, sondern zumindest Teile der verdampften Produkte werden kondensiert, d.h., abgekühlt, und wieder als Kondensat in den Mischkneter zurückgeführt. Da das Produkt in dem Mischkneter eine grosse Oberfläche hat, kann sich das Kondensat als Film über die ganze Fläche des Produktes verteilen und so zu einer effizienten Kühlung führen. Bevorzugt geschieht die Rückführung des Kondensats an der Stelle der Verdampfung selbst. Ist beispielsweise der Mischkneter in mehrere Kammern oder offene Zellen unterteilt, so dürfte es sich als ratsam erweisen, auch eine entsprechende Anzahl von Brüdendomen vorzusehen, durch die zu kondensierende Produktanteile abgezogen werden. Das Kondensat wird dann wieder auch an dieser Stelle der Brüdendome dem Mischkneter zugeführt.

Die optimale Siedetemperatur wird je nach Produkt durch eine Veränderung des Druckes eingestellt. Beispielsweise ist bekannt, dass PMMA (Polymethylmethacrylat) eine optimale Siedetemperatur von 160°C bei 3,5 bar hat. Unterhalb dieser Temperatur erhöht sich die Viskosität, wodurch das aufzunehmende Drehmoment verschlechtert wird, oberhalb der Temperatur besteht die Gefahr eine Depolymerisation.

Ein bevorzugter Aufbau eines Vakuums zum Abziehen von Dämpfen in dem Mischkneter hat den Vorteil, dass Luft und Inertgas, beispielsweise Stickstoff, abgezogen wird, sich verflüchtigendes Monomer jedoch in den Kondensator kondensiert und zur Kühlung wieder zurück in den Mischkneter geführt werden kann.

Sollte in einem bevorzugten Ausführungsbeispiel ein zweiter Mischkneter, Extruder od. dgl. nachgeordnet sein, so findet in diesem auch ein Entgasen statt. Beispielsweise kann in einem derartigen Extruder das Produkt durch eine entsprechende Geometrie der Knetelemente einer Pfropfenströmung unterworfen werden. In diesem Extruder findet eine stoffübergangslimitierte Eindampfung statt, weshalb hier bevorzugt zweiwellige Mischkneter verwendet werden, die im Stand der Technik beschrieben sind.

In diesem Mischkneter mit Pfropfenströmung ist wesentlich, dass die Oberfläche des Produktes möglichst schnell erneuert wird, da von dieser Oberfläche die Flüssigkeit abdampft. Da sich die Verdunstungsstellen mehr und mehr in das Gutsinnere zurückziehen, muss die Produktoberfläche durch intensiveres Kneten permanent erneuert werden. Ferner ist eine gute Produkttemperaturkontrolle notwendig.

Dem Anliegen der grösseren Produktoberfläche kann vor allem auch dadurch Rechnung getragen werden, dass das Produkt vor dem Eintritt in den Extruder zerkleinert wird, was beispielsweise durch ein entsprechendes Lochblech als Zerkleinerungseinrichtung geschieht. Wird das Produkt nach dem Austrag aus dem Mischkneter durch beispielsweise eine Zahnradpumpe durch die Lochplatte gedrückt, so gelangt es spaghettiartig in den Extruder, wodurch es eine sehr grosse Oberfläche ausbildet. Es ist jedoch auch andere Zerkleinerungseinrichtungen gedacht. Auch die Wärmeaufnahme ist selbstverständlich durch die grössere Oberfläche verbessert.

Ein der Zahnradpumpe vorgeschaltetes Drosselventil sorgt im Zusammenwirken mit einem Füllstandsanzeiger für den Mischkneter dafür, dass im Mischkneter selbst der Produktinhalt in etwa konstant gehalten wird. Gleichzeitig dienen Zahnradpumpe und Drosselventil dazu, einen Übergang von Mischkneter zu Extruder und umgedreht abzusperren. Auf diese Weise kann beispielsweise der Mischkneter im Vakuum und der Extruder im Überdruck oder umgedreht betrieben werden.

### FIGUREN BESCHREIBUNG

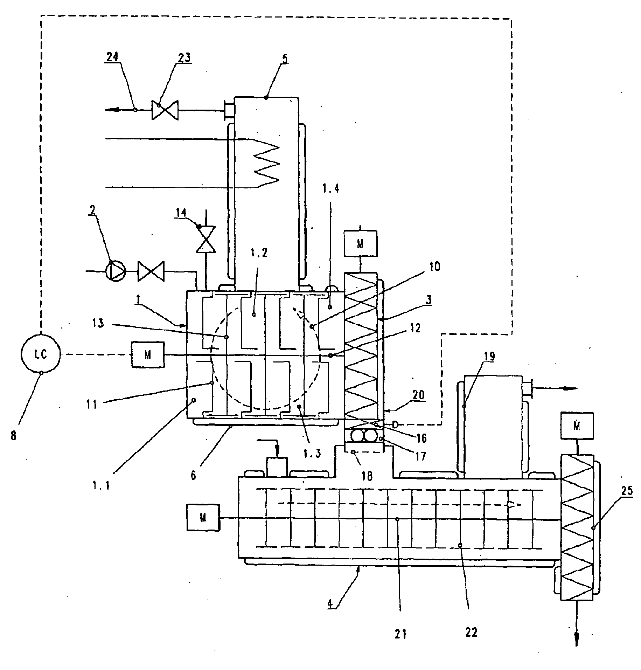

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in ihrer einzigen Figur eine schematische Darstellung einer erfindungsgemässen Anlage zum Behandeln von zähviskosen Produkten, insbesondere zur Durchführung von Polymerisationsprozessen.

In einem einwelligen, von einem Heizmantel 6 umgebenen Mischkneter 1 mit rückmischender Rührwellengeometrie, welcher teilweise mit reagiertem Produkt gefüllt ist, werden kontinuierlich Monomer(e), Katalysatoren, Initiatoren und eventuell kleine Mengen an Lösemittel über entsprechende Dosiereinrichtungen 2 eingetragen und im Prozessraum rückgemischt. Dies wird durch den gestrichelten Pfeil 10 angedeutet. Der Mischkneter 1 ist dabei in vier Kammern unterteilt, die durch miteinander arbeitenden Knetgegenelementen 11 und sich an einer Welle 12 befindlichen Knetelemente 13 gebildet werden. Dabei ist unter dem Begriff "Kammer" keine geschlossene Kammer zu versehen, sondern offene Zellen, zwischen denen das Produkt rückgemischt werden kann.

Das Reaktionsprodukt wird mittels einer angebauten Austragseinrichtung 3 abgezogen. Deren Motor M steht mit einer Messeinrichtung 8 für den Füllgrad des Mischkneters 1 in Verbindung. Das Abziehen erfolgt bevorzugt so, dass der Füllgrad im Mischkneter 1 konstant bleibt.

Die Viskosität der Reaktionsmasse in dem Mischkneter 1 wird durch die Wahl der Reaktionsparameter z.B., Durchsatz, Temperatur, Druck, so eingestellt, dass das Produkt in einem nachfolgenden LIST-Restentgaser oder -extruder 4 direkt devolatilisiert oder das unreagierte Monomer in einer nachfolgenden Apparatur, z.B. einem Reifungstank, ausreagiert werden kann.

Reaktionstemperatur und -druck werden vorzugsweise so gewählt, dass sich der Monomerüberschuss respektive der Lösungsmittelanteil im Siedebereich befindet. Der entsprechende Temperaturbereich hängt vom Produkt selbst ab.

Beispielsweise kann die Siedetemperatur eines bestimmten Monomers unter einem Druck von 3,5 bar bei 160°C optimal sein, d.h., das Monomer hat noch eine relativ niedrige Viskosität, so dass die Welle 12 relativ wenig Drehmoment aufnehmen muss. In diesem Fall liegt bei dieser Temperatur und diesem Druck die optimale Reaktionstemperatur.

Würde dieses Produkt nur beispielsweise unter einem Druck von 2 bar behandelt werden, läge die Siedetemperatur beispielsweise bei 140°C, was zu einer höheren Produktviskosität führt, so dass ein höheres Drehmoment für die Welle 12 aufgenommen werden müsste, was insgesamt schlechter für das Verfahren ist.

Würde dagegen der Druck auf beispielsweise 4 bar erhöht werden, läge die Siedetemperatur bei 180°C, wobei es bei dieser Temperatur zu einer unerwünschten Depolymerisation kommt.

Mit diesem eben beschriebenen Verfahren ist es möglich, die Reaktionswärme und die dissipierte Knetenergie durch das Verdampfen des Lösemittels/Monomer abzuführen. Dieser Dampf wird in einem auf dem Kneter 1 aufgesetzten Rückflusskondensator 5 kondensiert und in die Reaktionsmasse zurückgegeben. Mehrere Rückflusskondensatoren können auch auf der Länge des Mischkneters 1 verteilt werden. Insbesondere ist es denkbar, dass jeder Kammer ein Rückflusskondensator zugeordnet wird.

Die Kondensation kann im übrigen auch extern realisiert werden, und das Kondensat wird mit verschiedenen Düsen zurück auf die Monomer-/Polymermasse homogen zudosiert. Durch das kleine UD (Länge/Durchmesser)-Verhältnis von bevorzugt 0,5 bis 3,5 des Mischkneters 1 wird das rückfliessende Kondensat optimal gleichmässig im Reaktor zurückgemischt, was bei bisher verwendeten rückmischenden Extrudern mit einem grossen UD-Verhältnis ein grosses Problem darstellt.

Der rückgemischte Mischkneter 1 kann unter Vakuum, atmosphärisch oder unter Druck fahren. Für Potymerisationssysteme, welche mit Vakuum betrieben werden, wird ein Ventil 23 geöffnet und die Leitung 24 an eine Vakuumpumpe angeschlossen. Auf diesem Wege wird Luft und Stickstoff als Inertgas abgezogen, das Monomer kondensiert jedoch in dem Kondensator 5 und kann zurück in den Mischkneter 1 gelangen.

Für Polymerisationssysteme, welche atmosphärisch betrieben werden, wird das Ventil 23 geöffnet und die Leitung unter diesen atmosphärischen Bedingungen gelassen.

Für Polymerisationssysteme, welche mit Drücken höher als Umgebungsdruck betrieben werden, wird bevorzugt mit einem Inertgas (z.B. Stickstoff) der Systemdruck auf einen bestimmten Wert geregelt, was mittels eines Ventils 14 geschieht. Das Ventil 23 ist in diesem Fall geschlossen.

Einem Austrag der Austragseinrichtung 3 nachgeschaltet ist ein Drosselventil 16, auf welches eine Zahnradpumpe 17 folgt. Die Drosselventilregelung geschieht ebenfalls in Übereinstimmung mit dem Füllstand des Mischkneters 1, der durch die Messeinrichtung 8 ermittelt wird. Auf die Zahnradpumpe 17 folgt eine Lochplatte 18, durch welche Produkt aus der Austragseinrichtung 3 spaghettiartig in den Extruder 4 eingebracht werden kann.

Ein Pfeil 20 vor dem Drosselventil 16 deutet an, dass in diesem Bereich in die Austragseinrichtung 3 auch ein Stripmittel eingegeben werden kann.

Dem Entgaser 4 ist ein Motor M zugeordnet, über den eine oder mehrere Rührwelle/n 21 mit Rühr-/Knetetementen 22 in dem Entgaser 4 angetrieben werden. Die Rührwellengeometrie ist so ausgestaltet, dass eine Pfropfenströmung resultiert. Ferner sind dem Entgaser 4 ein oder mehrere Brüdendom(e) 19 aufgesetzt, über den/die verdampfende Produkte abgezogen werden können.

An den Entgaser 4 schliesst eine weitere Austragsschnecke 25 an, die wiederum von einem Motor M angetrieben ist.

### Bezugszeichenliste

| | | | | | |
|---|---|---|---|---|---|
| 1 | Mischkneter/Kammern | 34 | | 67 | |
| 2 | Dosiereinrichtung | 35 | | 68 | |
| 3 | Austragseinrichtung | 36 | | 69 | |
| 4 | Extruder | 37 | | 70 | |
| 5 | Kondensator . | 38 | | 71 | |
| 6 | Heizmantel | 39 | | 72 | |
| 7 | | 40 | | 73 | |
| 8 | Messeinrichtung | 41 | 74 | 74 | |
| 9 | | 42 | | 75 | |
| 10 | Pfeil | 43 | | 76 | |
| 11 | Knetgegenelement | 44 | | 77 | |
| 12 | Welle | 45 | | 78 | |
| 13 | Knetelement | 46 | | 79 | |
| 14 | Ventil | 47 | | | |
| 15 | | 48 | | | |
| 16 | Drosselventil | 49 | | | |
| 17 | Zahnradpumpe | 50 | | | |
| 18 | Lochplatte | 51 | | | |
| 19 | Brüdendom | 52 | | | |
| 20 | Pfeil | 53 | | | |
| 21 | Rührwelle | 54 | | M | Motor |
| 22 | Knetelement | 55 | | | |
| 23 | Ventil | 56 | | | |
| 24 | Leitung | 57 | | | |
| 25 | Austragsschnecke | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Durchführung von Polymerisationsprozessen, wobei Monomer(e) und/oder Katalysatoren und/oder Initiatoren einem rückgemischten Mischkneter (1) mit einem Längen/Durchmesserverhältnis von 0,5 - 3,5, zugegeben, darin mit bereits reagiertem Produkt rückgemischt werden und das reagierte Produkt aus dem Mischkneter (1) abgeführt wird, **dadurch gekennzeichnet, dass** das Produkt durch Energieeintrag bestehend aus mechanischer Knetenergie und Wärmeübertragung über den Kontakt mit Kneterwärmeaustauschflächen bis nahe oberhalb der Einbruchstelle der Verdampfungsgeschwindigkeit verdampft wird und in das so voreingedampfte viskose Produktbett kontinuierlich neue niedrigviskose Produktlösung derart eingemischt wird, dass die Verdampfungsgeschwindigkeit oberhalb der Einbruchstelle bleibt.

2. Verfahren nach Anspruch 1, **dadurch gekennzeichnet, dass** eine Knetenergie durch Veränderung der Drehzahl und/oder des Füllgrades des Mischkneters (1) beeinflusst wird.

3. Verfahren nach Anspruch 1 oder 2, **dadurch gekennzeichnet, dass** das Produkt in dem Mischkneter (1) kontinuierlich rückgemischt wird.

4. Verfahren nach wenigstens einem der Ansprüche 1 bis 3, **dadurch gekennzeichnet, dass** das Produkt kontinuierlich aus dem Mischkneter (1) ausgetragen und in einen zweiten Mischkneter oder Extruder (4) eingegeben wird.

5. Verfahren nach Anspruch 4, **dadurch gekennzeichnet, dass** das Produkt beim Austragen aus dem Mischkneter (1) aufgeheizt wird, bevor es in den Extruder (4) gelangt.

6. Verfahren nach Anspruch 4 oder 5, **dadurch gekennzeichnet, dass** das Produkt in dem Extruder (4) einer Pfropfenströmung unterworfen wird.

7. Verfahren nach Anspruch 6, **dadurch gekennzeichnet, dass** das Produkt in dem Extruder (4) einer grossen Oberflächenerneuerung sowie guter Produkttemperaturkontrolle unterworfen wird.

## Claims

1. A method of performing polymerisation processes, wherein monomer(s) and/or catalysts and/or initiators are fed into a back-mixed kneader mixer (1) with a length/diameter ratio of 0.5 - 3.5, back-mixed therein with already reacted product and the reacted product is removed from the kneader mixer (1),
**characterised in that**
the product is evaporated by input of energy consisting of mechanical kneading energy and heat transfer by means of contact with kneader heat exchange surfaces to closely above the drop-off point of the evaporation rate, and new low-viscosity product solution is continuously mixed into the viscous product bed that has been pre-evaporated in this way, in such a way that the evaporation rate remains above the drop-off point.

2. The method according to claim 1, **characterised in that** a kneading energy is influenced by changing the speed and/or the fill level of the kneader mixer (1).

3. The method according to at least one of claims 1 to 2, **characterised in that** the product is continuously back-mixed in the kneader mixer (1).

4. The method according to at least one of claims 1 to 3, **characterised in that** the product is continuously discharged from the kneader mixer (1) and fed into a second kneader mixer or extruder (4).

5. The method according to claim 4, **characterised in that** the product is heated on its discharge from the kneader mixer (1) before it passes into the extruder (4).

6. The method according to claim 4 or 5, **characterised in that** the product is subjected to a plug flow in the extruder (4).

7. The method according to claim 6, **characterised in that** the product is subjected to a large surface renewal and good product temperature control in the extruder (4).

## Revendications

1. Procédé pour la mise en oeuvre de procédés de polymérisation, dans lequel un ou des monomères et/ou catalyseurs et/ou initiateurs sont alimentés dans un mélangeur-pétrisseur à mélange rétroactif (1) avec un rapport longueur/diamètre de 0,5 à 3,5, y sont rétromélangés avec du produit déjà réagi et le produit réagi est évacué du mélangeur-pétrisseur (1),
**caractérisé par le fait**
**que** le produit est évaporé par entrée d'énergie composée d'énergie de pétrissage mécanique et de transmission de chaleur via le contact avec des surfaces d'échange de chaleur de pétrissage jusqu'environ au-dessus du point de rupture de la vitesse d'évaporation et qu'au lit de produit visqueux ainsi pré-évaporé est mélangée en continu une nouvelle solution de produit à faible viscosité de sorte que la vitesse d'évaporation reste au-dessus du point de rupture.

2. Procédé selon la revendication 1, **caractérisé par le fait qu'**une énergie de pétrissage est influencée par changement du nombre de tours et/ou du degré de remplissage du mélangeur-pétrisseur (1).

3. Procédé selon au moins l'une des revendications 1 à 2, **caractérisé par le fait que** le produit est rétromélangé en continu dans le mélangeur-pétrisseur (1).

4. Procédé selon au moins l'une des revendications 1 à 3, **caractérisé par le fait que** le produit est évacué en continu du mélangeur-pétrisseur (1) et introduit dans un deuxième mélangeur-pétrisseur ou extrudeuse (4).

5. Procédé selon la revendication 4, **caractérisé par le fait que** le produit est chauffé lors de l'évacuation hors du mélangeur-pétrisseur (1), avant qu'il n'arrive dans l'extrudeuse (4).

6. Procédé selon la revendication 4 ou 5, **caractérisé par le fait que** le produit est soumis, dans l'extrudeuse (4), à un écoulement piston.

7. Procédé selon la revendication 6, **caractérisé par le fait que** le produit est soumis, dans l'extrudeuse (4), à un grand renouvellement de surface ainsi qu'à un bon contrôle de température de produit.
